# EUROPEAN PATENT SPECIFICATION

(11) **EP 3 121 156 B1**
(45) Date of publication and mention of the grant of the patent: **21.10.2020**
(21) Application number: 16180736.7
(22) Date of filing: 22.07.2016
(51) Int. Cl.: C04B 28/10

(54) **COMPOSITIONS COMPRISING SYMBIOTIC MICROORGANISMS, A PROCESS FOR THEIR MANUFACTURING AND USE THEREOF IN THE FIELD OF BUILDING**
ZUSAMMENSETZUNGEN MIT SYMBIOTISCHEN MIKROORGANISMEN, VERFAHREN ZU DEREN HERSTELLUNG UND VERWENDUNG DAVON IM BAUBEREICH
COMPOSITIONS COMPRENANT DES MICRO-ORGANISMES SYMBIOTIQUES, PROCÉDÉ POUR LEUR FABRICATION ET LEUR UTILISATION DANS LE DOMAINE DE LA CONSTRUCTION

(30) Priority: 22.07.2015 IT UB20152396
(43) Date of publication of application: 25.01.2017
(73) Proprietor: SENINI S.r.l., 25018 Montichiari (BS) - Frazione Novagli (IT)
(72) Inventor: Barcella, Gilberto, 25018 Montichiari (BS) Frazione Novagli (IT); Ronchetti, Paolo, 25018 Montichiari (BS) Frazione Novagli (IT)
(74) Representative: Brunacci, Marco

(56) References cited:
- WO-A1-2010/130712
- WO-A1-2011/137106
- FR-A1- 2 734 261
- "Equilibrio Naturale Costruito", , 1 January 2015 (2015-01-01), XP055258285, Retrieved from the Internet: URL:http://images.co.camcom.gov.it/f/agend a/1750_RONCHETTI_Natural_Beton_di_canapa_4 .pdf [retrieved on 2016-03-15]

## Description

The existence in nature of mixtures of symbiotic microorganisms, the positive effects of such mixtures of symbiotic microorganisms on the nature, and possible applications in agriculture are known in the state of the art; the potential of these organisms existing in nature and their ability to coexist in a single mixture was discovered in the early 80s by Prof. Higa, moved by the will to find alternative products to the fertilizers and pesticides used in conventional agriculture, and thereby developing a microbial culture that "promoted life" alternatively to chemical compounds .

Among the most important symbiotic microorganisms present in the mixture there are:
i) the photosynthetic bacteria: which are independent and self-preservative microorganisms that reconstruct useful substances through the metabolization of the secretions of the roots of plants, of organic material and of noxious gases; use sun and heat of the ground as an energy source; the substances produced by them contain amino acids, nucleic acids and biologically active substances. These bacteria also synthesize glucose, support the activity of other microorganisms that are part of the mixture of symbiotic microorganisms, and effectively use the metabolic products of other microbes;
ii) the yeasts: they synthesize the antimicrobial substances and useful substances of amino acids and of sugars isolated from the photosynthetic bacteria. Yeasts produce hormones and enzymes involved in cell division and their secretions are a useful substrate for active microorganisms such as lactic acid bacteria and actinomycetes;
iii) the lactic acid bacteria: they produce lactic acid from sugar and carbohydrates that are metabolized by photosynthetic bacteria and yeasts. Lactic acid is a strong sterilant that inhibits harmful microorganisms and promotes the accelerated decomposition of the organic material.

Thus, in mixtures of symbiotic microorganisms both aerobic and anaerobic microorganisms coexist, wherein the substances produced by ones are fundamental for the existence of the others.

The activity of these microorganisms is based on the principle of "prevalence" or "dominance", which foresees the presence of three categories of microorganisms:
- degenerative or pathogenic ones (that produce free radicals through the oxidative process);
- neutral ones (representing the majority);
- regenerative ones (which hinder the oxidation producing antioxidant substances).

According to the principle of prevalence, neutral microorganisms follow the predominant group. The regenerative microorganisms, when applied properly, replace degenerative microorganisms so assuming the control, and drag in their direction neutral microorganisms. In this way they originate a regenerative (pro-biotic) environment with a self-generating process during time.

In each biome the relationship among degenerative and regenerative microorganisms is critical since the neutral microorganisms can take or lose the upper hand in certain conditions; for this reason it is thought that the biome in question can be positively influenced by providing colonies of "regenerative microorganisms".

It is well known the use of these mixtures in the agricultural field; in fact there are several applications in this field, such as:
- improving the water quality (US 5,683,951);
- disposal of organic waste (US 5,707,856);
- deodorize (US 5,683,664);
- soil improvement (US 5,698,028);
- purification of exhausted gases (US 5,683,665);

From agriculture, the use of such mixtures has also been extended to other fields, such as:
- cleaning of the house: for example, ecological products for the cleaning of the oven and household appliances, antifungal or descaling products, for laundry cleaning, or in addition to deodorants to purify the air of domestic rooms;
- health and well-being: for example, in natural cosmetics for skin creams, to heal wounds, in addition to toothpastes (to encourage bacterial flora and to remove plaque without attacking the enamel), to reduce the electromagnetic fields of domestic rooms;
- food: for food supplements rich in antioxidants, minerals, amino acids and vitamins obtained by fermentation of microorganisms of said mixtures, for the production of cheese, for the regeneration of water.

The use of microorganisms in the building field is also known and investigated, for example, in the creation of ceramics for hydraulic systems with the purpose of improving water, in paints or sculptor's plasters to fight mildews. WO2010/130712 discloses the use of microorganisms to accelerate the carbonation and to increase the compressive strength of non-hydraulic lime mortars. In the field of sustainable-building (or green building, science that involves an interdisciplinary approach in the design, construction and insulation of buildings by promoting the use of natural materials sourced locally, with the aim of increasing comfort, well-being and energy savings for the occupants) it is also known the use of compositions, for example for the production of bricks and insulating materials, comprising mineral binders (eg. natural hydraulic lime, air lime, lime putty, dolomitic lime, cement, Roman cement) and wood of hemp (or shives, or what remains of the hemp stalk after the textile fiber extraction), thus combining insulation and thermal mass properties. These are materials with high thermal insulation performance, excellent hygrometric regulation, low incorporated energy and ability to absorb C02 from the atmosphere.

Said products offer a number of undisputed advantages, including:
- high energy savings;
- thermal, acoustic and hygrometric comfort;
- resistance to insects and rodents;
- absence of toxic fumes in case of fire;
- low energy consumption during manufacture;
- recyclability and biodegradability at the end of the life cycle;
and they are typically used for the ex-novo building of insulating walls, for the exterior coat insulation in existing buildings, for inner insulation of existing buildings, subfloors, ventilated crawl spaces, internal partitions with sound insulation.

Another composition used in order to produce natural concrete is known from "Equilibrio Naturale Costruito", 1 January 2015 (2015-01-01), XP055258285. Now, with the present invention it has surprisingly been found that the addition of mixtures of symbiotic microorganisms in the ecological compositions for building use as reported above, brings a series of advantages and unexpected synergistic effects.

Object of the present invention is therefore a composition comprising mixtures of symbiotic microorganisms, water and shives.

Another object of the present invention is a process for the preparation of said composition.

Another object of the present invention is the use of said composition in the building field.

The present invention also relates to a brick comprising said composition.

### DETAILED DESCRIPTION OF THE INVENTION

Object of the present invention is a composition comprising a mixture of symbiotic microorganisms, water and shives, wherein said mixture of symbiotic microorganisms is intentionally added to the composition and comprises lactic acid bacteria, photosynthetic bacteria, yeasts, fungi or actinomycetes. Said composition further comprises calcium hydroxide (air lime), magnesium oxide and/or lime putty (air lime as paste) and/or semihydrated dolomitic lime (calcium magnesium dihydroxide oxide).

Preferably, said composition further comprises semihydrated dolomitic lime (calcium magnesium dihydroxide oxide).

Preferably, said mixture of symbiotic microorganisms comprises microorganisms selected from: *Lactobacillus bulgaricus, Lactobacillus casei, Lactobacillus delbrueckii, Lactobacillus fermentum, Lactobacillus plantarum, Lactococcus lactis, Lactobacillus buchneri, Rhodopseudomonas palustris, Rhodopseudomonas sphaerodies, Saccharomyces cerevisiae, Streptococcus thermophilus, Rhodobacter sphaeroides, Aspergillus oryzae, Candida utilis, Mucor hiemalis, Bifidobacterium animalis, Bifidobacterium bifidum.*

Preferably, said composition further comprises colloidal silver.

In a preferred embodiment, said mixture of symbiotic microorganisms is selected from HUMITAL® and EM®; preferably, said mixture of symbiotic microorganisms is HUMITAL®.

Preferably, the composition of the present invention further comprises pure molasses from sugarcane and a mixture comprising potassium, calcium, magnesium, sodium, sulfur, nitrogen, phosphorus, boron, iron, copper, cobalt, germanium, selenium, manganese, molybdenum, titanium , zinc, salicylic acid, folic acid, uronic acid, olivine, polyelectrolytes, polysaccharides, humus substances and plant extracts. Even more preferably, said mixture is GREENGOLD®.

In a preferred embodiment, the composition of the present invention comprises (% expressed in volume/volume):
- 1-3% of HUMITAL;
- 1-3% of pure sugarcane molasses;
- 0.1-0.3% of GREENGOLD;
and it takes the tradename NAMI®.

Said composition comprising a mixture of symbiotic microorganisms is prepared by mixing in lukewarm water the ingredients listed above, and left for 15 days at a temperature comprised between 15°C and 20°C, in controlled natural and artificial lighting conditions, in a closed place.

The herein disclosed composition of the present invention has the unexpected advantage of speeding up the lime carbonation process; this phenomenon involves greater mechanical strength in the short period and shorter drying times of biocomposites.

The microorganisms in the composition of the present invention feed on the sugar (present in molasses of the mother liquor from which they come) and produce CO₂ as waste, allowing the lime to start the carbonation process also in the presence of water. The physico-chemical properties of the products are therefore improved in terms of mechanical strength.

The trigger of the lime carbonation process also favours the drying of the products.

The thus obtained composition, not only is improved in mechanical strength and lower drying time, but offers the additional advantage of removing possible mildew problems in the slow drying phase of biocomposites. In fact, the yeasts feed on bacteria that give rise to mildew and solve the typical problem of the building field, particularly felt at high latitudes and in wet cold climates .

The present invention also relates to the use of the composition disclosed above in the field of green building; preferably, the present invention relates to the use of the composition disclosed above for the preparation of bricks (commercially defined as BIOMATTONE®) and/or compositions (commercially known as NATURAL BENTON®) to insulate roofings, for infill walls, to insulate walls, as thermo-plaster, plaster, finishes (finish plasters, paints, tonachino plaster finishes).

The present invention also relates to a process for the preparation of said composition.

In one embodiment, the BIOMATTONE® is obtained by mixing :
- water (from 180-240 L) ;
- NAMI® (from 4-8 L) ;
- calcium hydroxide and magnesium oxide and/or lime putty and/or semihydrated dolomitic lime (calcium magnesium dihydroxide oxide) (from 160-180 kg) ;
- shives (90-140 kg) .

Said so obtained mixture is then printed by means of fixed or mobile block making machine.

In one embodiment, depending on the different density of the product, the NATURAL BETON® is made by mixing in an orbital or with a projection machine the following ingredients :

| | **NATURAL BETON® (density)** | | |
|---|---|---|---|
| **Ingredients** | **Low: 200 (100-200 kg/m³)** | **Medium: 300 (201-400 kg/m³)** | **High: 500 (401-700 kg/m³)** |
| water | 150-220 L (46.2-48.1%) | 180-400 L (47.2-48.1%) | 400-700 L (50.7-53.1%) |
| NAMI® | 2-6 L (0.6-1.3%) | 4-8 L (0.9-1.1%) | 4-10 L (0.5-0.7%) |
| Calcium hydroxide and magnesium oxide and/or lime putty and/or semihydrated dolomitic lime (calcium magnesium dihydroxide oxide) | 70-110 kg (22.4-23.1%) | 100-300 kg (26.7-35.4%) | 300-600 kg (39.8-43.5%) |
| shives | 90-140 kg (28.8-29.4%) | 90-140 kg (16.5-24.1%) | 50-70 kg (5.1-6.6%) |

Below are some not limiting examples, aimed at better disclosing the invention.

### EXAMPLES

### Compressive strength

It was prepared a sample of NATURAL BETON® 200 added with NAMI® as already disclosed.

The thus obtained sample was subjected to a test to measure the compressive strenght (Certimac soc. Cons. a r.l., according to the UNI EN 826:1998) and compared to the same sample of NATURAL BETON® 200 without addition of NAMI®.

The sample mixtures were made in the following way:
- NATURAL BETON® 200 with NAMI®: 100kg LDN Natural Dolomite Binder 100 kg CNB CANABIUM® 100kg, water 200 L, NAMI® 8L, manually mixed in succession.
- NATURAL BETON® 200 without NAMI®: 100kg LDN Natural Dolomite Binder CNB CANABIUM® 100kg, water 200 L, manually mixed in succession.

The samples were conditioned in the reference conditions for 45 days at a temperature of 21°C and a relative humidity equal to 45-50%. The obtained results has shown an increase of the compressive strenght of 26% of the sample added with NAMI® with respect to the comparative sample.

### Manufacturininq time of BIOMATTONE®

Manufacturing tests of BIOMATTONE® added with NAMI® have shown a reduction of the maturing times of the product - before being put on benches - equal to 50% compared to conventional manufacturing cycle without the addition of NAMI®.

The BIOMATTONE® samples were manufactured, in the following way:
A) 132kg of CNB CANABIUM®, 170kg of LDN Natural Dolomite Binder, 184 L of water, 8L of NAMI®;
B) 132kg of CNB Canabium®, 170kg of LDN Natural Dolomite Binder, 184L of Water;
C) 132kg of CNB CANABIUM®,160kg of LDN Natural Dolomite Binder, 40kg of hydraulic binder, 184L of water.

BIOMATTONE® added with NAMI® appears to be ready for being put on benches after 3/4 days from manufacture. In the absence of NAMI® the maturation of BIOMATTONE® requires 15/20 days in the winter period and 7/10 days in the summer period. The tests have made evident that with the addition of NAMI® there is no need to add the mixture with a hydraulic binder (eg. cement) so as to obtain an analogous result.

### Drying times

A sample of BIOMATTONE® added with NAMI® was prepared as already disclosed. The so obtained sample was subjected to the measurement test of the internal relative humidity level through a hygrometer GANN mod. Hydromette HB30 and compared to an analogous sample of BIOMATTONE® without the addition of NAMI® The BIOMATTONE® samples were manufactured, in the following way:
A) 132kg of CNB CANABIUM®, 170kg of LDN Natural Dolomite Binder, 184L of water, 8L of NAMI®;
B) 132kg of CNB Canabium®, 170kg of LDN Natural Dolomite Binder, 184L of water; The samples were conditioned in reference conditions for 90 days at a temperature of 21°C and relative humidity equal to 45-50%.

The obtained reliefs have shown a relative moisture content of 41% lower in the sample added with NAMI® compared to the comparative sample, confirming the lower drying time.

The presence of NAMI® allows the marketing and installation of BIOMATTONE® after 23 days from its manufacure instead of the normally required 40 days of drying.

### Mildew contamination

Application tests using a projection machine NATURAL BETON® 200 with and without adding NAMI® on a gypsum fiber panel like Fermacell in conditions of
- low temperature (14°C); and
- high relative humidity (90 %) ;
allowed to check the appearance of mildew on the panel with NATURAL BETON® 200 without NAMI® and its complete absence on the panel NATURAL BETON® 200 with NAMI® .

The samples were manufactured, in the following way :
- NATURAL BETON® 200 with NAMI®: 100 kg of CNB CANABIUM®, 100 kg of LDN Natural Dolomite Binder, 200L of water, 8L of NAMI® . The biocomposite was applied with the Projecto machine 100 .
- NATURAL BETON® 200 without NAMI® : 100kg of CNB CANABIUM®, 100 kg of LDN Natural Dolomite Binder, 200L of water.

The biocomposite was applied with the Projecto machine 100 .

## Claims

1. A composition comprising a mixture of symbiotic microorganisms, water and shives, **characterized by** the fact that said mixture of symbiotic microorganisms is intentionally added to the composition and comprises lactic acid bacteria, photosynthetic bacteria, yeasts, fungi or actinomycetes, wherein the composition further comprises calcium hydroxide (air lime), magnesium oxide and/or lime putty (air lime as paste) and/or semihydrated dolomitic lime (calcium magnesium dihydroxide oxide).

2. The composition according to claim 1 comprising semihydrated dolomitic lime (calcium magnesium dihydroxide oxide).

3. 4. The composition according to one or more of the preceding claims, wherein said microorganisms are selected among: Lactobacillus bulgaricus, Lactobacillus casei, Lactobacillus delbrueckii, Lactobacillus fermentum, Lactobacillus plantarum, Lactococcus lactis, Lactobacillus buchneri, Rhodopseudomonas palustris, Rhodopseudomonas sphaerodies, Saccharomices cerevisiae, Streptococcus thermophilus, Rhodobacter sphaeroides, Aspergillus oryzae, Candida utilis, Mucor hiemalis, Bifidobacterium animalis, Bifidobacterium bifidum.

4. The composition according to claims 1-3 further comprising colloidal silver.

5. The composition according to one or more of claims 1-3 wherein said mixture of symbiotic microorganisms, water, shives, calcium hydroxide, magnesium oxide and/or lime putty and/or semihydrated dolomitic lime (calcium magnesium dihydroxide oxide) are present in said composition in the following proportions:
mixture of symbiotic microorganisms: 0.6-0.7%;
water: 46.2-53.1%;
calcium hydroxide, magnesium oxide and/or lime putty and/or semihydrated dolomitic lime (calcium magnesium dihydroxide oxide): 22.4-43.5%;
shives: 5.1-29.4%.

6. Use of the composition according to one or more of the preceding claims in the building field.

7. Use of the composition according to claim 6 for the manufacture of bricks, compositions for isolating roofings, infill walls, wall insulators, thermo-plaster, plaster, finish plasters, paints, tonachino plaster finish.

8. 9. A brick comprising the composition according to one or more of claims 1-5.

## Patentansprüche

1. Zusammensetzung, die eine Mischung aus symbiotischen Mikroorganismen, Wasser und Schäben umfasst, **dadurch gekennzeichnet, dass** die Mischung aus symbiotischen Mikroorganismen absichtlich der Zusammensetzung zugesetzt wird und Milchsäurebakterien, photosynthetische Bakterien, Hefen, Pilze oder Actinomyceten umfasst, wobei die Zusammensetzung ferner Calciumhydroxid (Luftkalk), Magnesiumoxid und/oder Kalkkitt (Luftkalk als Paste) und/oder halbhydratisierten dolomitischen Kalk (Calcium-Magnesium-Dihydroxid-Oxid) umfasst.

2. Zusammensetzung nach Anspruch 1, umfassend halbhydratisierten dolomitischen Kalk (Calcium-Magnesium-Dihydroxid-Oxid).

3. Zusammensetzung nach einem oder mehreren der vorstehenden Ansprüche, wobei die Mikroorganismen ausgewählt werden unter: Lactobacillus bulgaricus, Lactobacillus casei, Lactobacillus delbrueckii, Lactobacillus fermentum, Lactobacillus plantarum, Lactococcus lactis, Lactobacillus buchneri, Rhodopseudomonaspalustris, Rhodopseudomonas sphaerodies, Saccharomices cerevisiae, Streptococcus thermophilus, Rhodobacter sphaeroides, Aspergillus oryzae, Candida utilis, Mucor hiemalis, Bifidobacterium animalis, Bifidobacterium bifidum.

4. Zusammensetzung nach den Ansprüchen 1-3 ferner umfassend kolloidales Silber.

5. Zusammensetzung nach einem oder mehreren der Ansprüche 1-3, wobei die Mischung aus symbiotischen Mikroorganismen, Wasser, Schäben, Calciumhydroxid, Magnesiumoxid und/oder Kalkkitt und/oder halbhydratisiertem dolomitischem Kalk (Calcium-Magnesium Dihydroxid-Oxid) in dieser Zusammensetzung in den folgenden Anteilen vorhanden sind:
Mischung von symbiotischen Mikroorganismen: 0,6-0,7%;
Wasser: 46,2-53,1%;
Calciumhydroxid, Magnesiumoxid und/oder Kalkkitt und/oder halbhydratisierter dolomitischer Kalk (Calcium-Magnesium-Dihydroxid-Oxid): 22,4-43,5%;
Schäben: 5,1-29,4%.

6. Verwendung der Zusammensetzung nach einem oder mehreren der vorstehenden Ansprüche im Baubereich.

7. Verwendung der Zusammensetzung nach Anspruch 6 für die Herstellung von Ziegelsteinen, Zusammensetzungen zur Isolierung von Dächern, Ausfachungen, Wandisolierungen, Thermoputz, Putz, Oberputze, Farben, Tonachino-Putzoberflächen.

8. Ziegelstein, umfassend die Zusammensetzung nach einem oder mehreren der Ansprüche 1-5.

## Revendications

1. Composition comprenant un mélange de micro-organismes symbiotiques, de l'eau et des bûchettes, **caractérisée par le fait que** ledit mélange de micro-organismes symbiotiques est intentionnellement ajouté à la composition et comprend des bactéries de l'acide lactique, des bactéries photosynthétiques, des levures, des champignons ou des actinomycètes, dans laquelle la composition comprend en outre de l'hydroxyde de calcium (chaux aérienne), de l'oxyde de magnésium et/ou de la pâte à chaux (chaux aérienne sous forme de pâte) et/ou de la chaux dolomitique semi-hydratée (oxyde dihydroxyde de calcium-magnésium).

2. Composition selon la revendication 1, comprenant de la chaux dolomitique semi-hydratée (oxyde dihydroxyde de calcium-magnésium).

3. Composition selon une ou plusieurs des revendications précédentes, dans laquelle lesdits microorganismes sont sélectionnés parmi : Lactobacillus bulgaricus, Lactobacillus casei, Lactobacillus delbrueckii, Lactobacillus fermentum, Lactobacillus plantarum, Lactococcus lactis, Lactobacillus buchneri, Rhodopseudomonas palustris, Rhodopseudomonas sphaerodies, Saccharomices cerevisiae, Streptococcus thermophilus, Rhodobacter sphaeroides, Aspergillus oryzae, Candida utilis, Mucor hiemalis, Bifidobacterium animalis, Bifidobacterium bifidum.

4. Composition selon les revendications 1 à 3 comprenant en outre de l'argent colloïdal.

5. Composition selon une ou plusieurs des revendications 1 à 3, dans laquelle ledit mélange de microorganismes symbiotiques, ladite eau, lesdites bûchettes, ledit hydroxyde de calcium, ledit oxyde de magnésium et/ou ladite pâte à chaux et/ou ladite chaux dolomitique semi-hydratée (oxyde dihydroxyde de calcium-magnésium) sont présents dans ladite composition en les proportions suivantes :
mélange de microorganismes symbiotiques : 0,6 à 0,7 % ;
eau : 46,2 à 53,1 % ;
hydroxyde de calcium, oxyde de magnésium et/ou mottes de chaux et/ou chaux dolomitique semi-hydratée (oxyde dihydroxyde de calcium-magnésium) : 22,4 à 43,5 % ;
bûchettes : 5,1 à 29,4 %.

6. Utilisation de la composition selon une ou plusieurs des revendications précédentes dans le domaine du bâtiment.

7. Utilisation de la composition selon la revendication 6 pour la fabrication de briques, de compositions pour l'isolation de toitures, de murs intercalaires, d'isolants muraux, d'un enduit thermique, d'un enduit, d'enduits de finition, de peintures, d'un enduit au plâtre tonachino.

8. Brique comprenant la composition selon une ou plusieurs des revendications 1 à 5.
